# EUROPEAN PATENT SPECIFICATION

(11) **EP 1 820 702 B1**
(45) Date of publication and mention of the grant of the patent: **10.06.2009**
(21) Application number: 06110223.2
(22) Date of filing: 21.02.2006
(51) Int. Cl.: B60R 21/20

(54) **Deployment force concentrating system for a car seat mounted airbag**
System zur Konzentration der Entfaltungskraft für einen in einem Sitz montierten Airbag
Système pour concentrer la force de déploiement d'un coussin gonflable monté dans un siège de véhicule

(43) Date of publication of application: 22.08.2007
(73) Proprietor: Ford Global Technologies, LLC, Dearborn, MI 48126 (US)
(72) Inventor: Mårtensson, Emma, 412 82, Göteborg (SE); Liljeqvist, Carl-Johan, 413 01, Göteborg (SE); Fritzen, Johan, 44791 Vårgårda (SE); Hansson, Christian, 44730 Vårgårda (SE); Gustafsson, Magnus, 46158 Trollhättan (SE)
(74) Representative: Bergquist, Kjell Gunnar

(56) References cited:
- WO-A-99/15375
- WO-A-20/04062970
- US-A- 5 938 232
- US-A- 6 074 003
- US-B1- 6 349 964

## Description

### Technical Field

The present invention relates generally to a vehicle seat having upholstery and an airbag contained therein and also a vehicle with one ore more such seats. In particular it relates to such a seat with force concentrating means adjacent the airbag to concentrate the force of the inflating airbag at a designated tear line in the upholstery to ensure deployment of the airbag through the tear line upon inflation of the airbag. The force concentrating means is comprising a pair of panels, the pair of panels having two ends, tied to separate sides of their related tear line.

### Background Art

Many modern cars are equipped with seat airbags, so called side airbags, designed to inflate with the aid of a gas generator at accidents in order to protect the driver or a passenger from injuries, especially when the car is hit from the side. It is common practice to have the airbags mounted in a cover inside the seat upholstery, the cover being fixed to the seat frame, often with weld-studs. Also there are known airbags without a hard cover where the airbag and gas generator combination can be contained in a plastic wrapping or other kinds of soft cover. When inflating, the airbag deploys from its cover, rips up the upholstery and occupies the space between the person and the car inside, which can be a door panel, a pillar or the like.

In order to make the airbag inflate in the desired way and at the desired position, the seat is most often designed with the airbag cover and an upholstery tear line, most often a seam, in such positions relative each other that the airbag deploys through the designated seam. It is then to be secured that it actually is the tear line seam that is ripped and not an undesired other part of the upholstery, and also that the inflating airbag is instantly deployed.

The upholstery material can in most cars be chosen before the car is manufactured by the first buyer from many types of fabric. This means that the seat upholstery can have a range of material properties. Of importance here are for example such properties as tensile and tear strength, elongation, layer combinations and the variation with temperature by those properties. These variations must be considered when designing the seat in order always to get the desired performance from an inflating airbag.

In order to minimize the dependence of the material properties as described above it has been suggested to incorporate into a seat of the above kind a so called force concentrating means. The force concentrating means comprises a pair of panels that are each secured to the seat at a respective rear end and to each side of the desired tear line at a respective front end. The panels surround the way the airbag is travelling, when the airbag is deploying, and since the panels are made of a material which is very resistive to stretching, the force from the deploying airbag is directed to the tear line, which will tear. In case of the tear line being a seam, the seam will burst, most often by one or more sewing threads breaking. Such a seat is disclosed in EP patent no 1023206. In this patent, it is described how the force concentrating means extends through a hole in the foam body. This design implicates a complicated, time consuming assembly procedure.

The development of side airbags has led to new airbags which are designed to deploy into more than one direction. A fully deployed airbag thus can have two chambers, e.g. one reaching the space between the thorax of a traveller and the car inside near the thorax and another reaching the space between the pelvis of a traveller and the car inside near the pelvis. With such an airbag, having two chambers, a force concentrating means of the above kind, covering the whole airbag, would be directing the force from the deploying airbag chambers also into a direction between the chambers, where no force is desired, and then unnecessary lessen the force where it is desired. In other words, the two chambers, often being deployed by the same gas generator, have to be balanced with each other in order to get the right final position and size timely and quickly. The problem exists even if there is a separate gas generator for each chamber.

### Disclosure of Invention

In order to overcome the above problem, when using multi chamber airbags, a seat according to claim 1 is suggested, which seat comprises one force concentrating means for each airbag lobe, each force concentrating means being concentrating the respective force to a related primary tear line.

In certain circumstances it is an advantage to have the two force concentrating means interact, and for that reason, according to one embodiment of the invention, the force concentrating means are joined by linking means, linking the forces generated by the deploying air bag chambers in the force concentrator means.

In one embodiment, the force concentrating means (41,42) comprises a pair of panels, made of low tensile fabric and are in an integrated way sewn into the upholstery. This embodiment makes a very cost effective

assembly, since the manufacturer of the upholstery can integrate the force concentrator means in the sewing process. The force concentrator means then get "automatically" positioned in the seat when the upholstery is mounted.

In yet another embodiment, where the force concentrating means comprises fabric panels, the linking means are integrated in the panels. As above, it is an advantage to "automatically" have it in the assembled seat.

In still other embodiments the two force concentrating means can have different working directions and different length. In such a case, if the panel fabric has a tensile direction in which their tensile strength is optimally low it is an advantage if the tensile direction is oriented more close in line with the direction of the two force concentrating means being the longest of the two.

Brief Description of Drawings

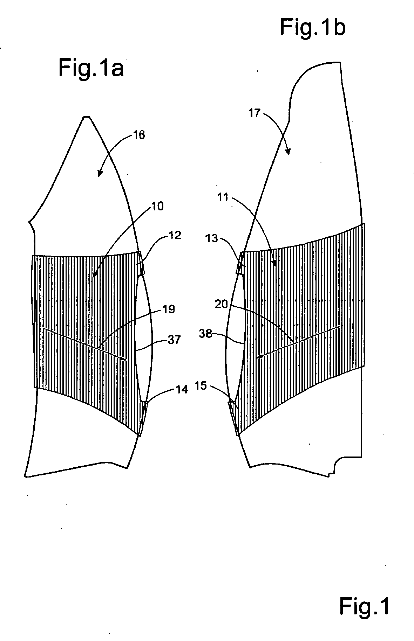

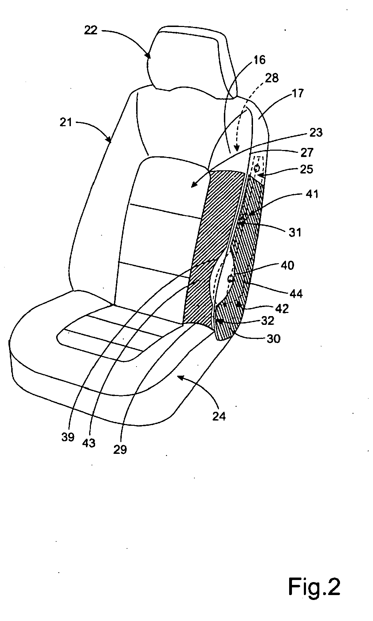

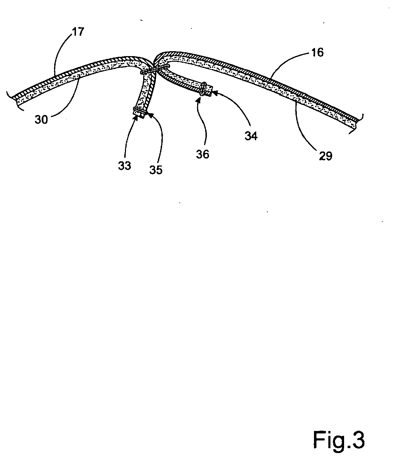

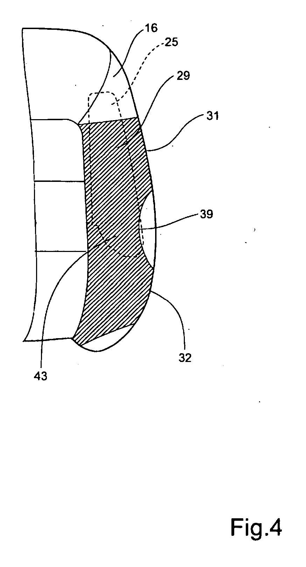

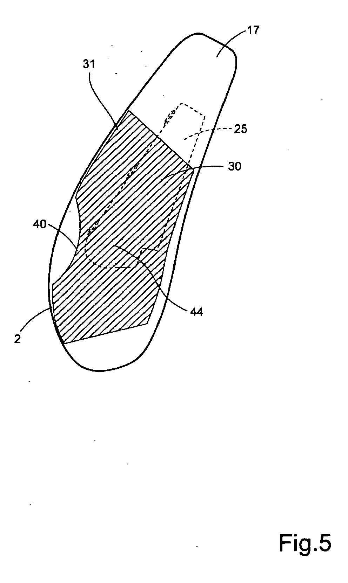

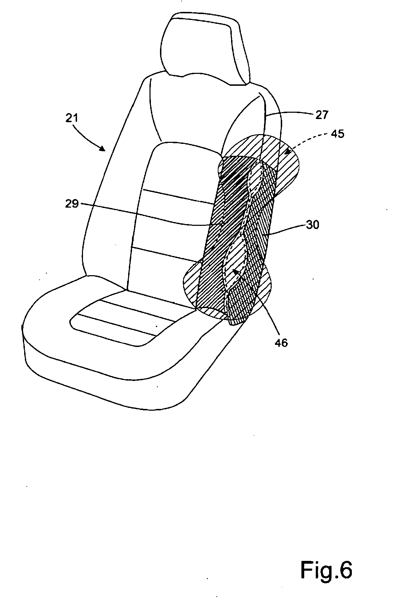

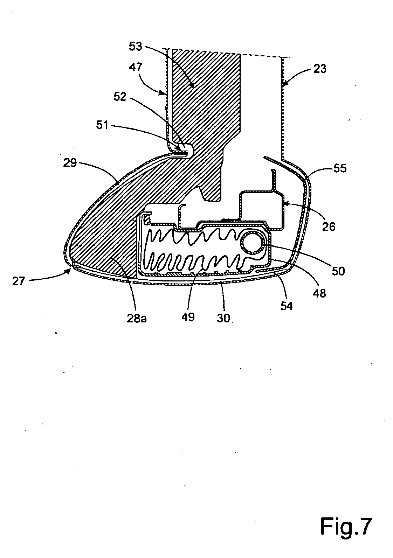

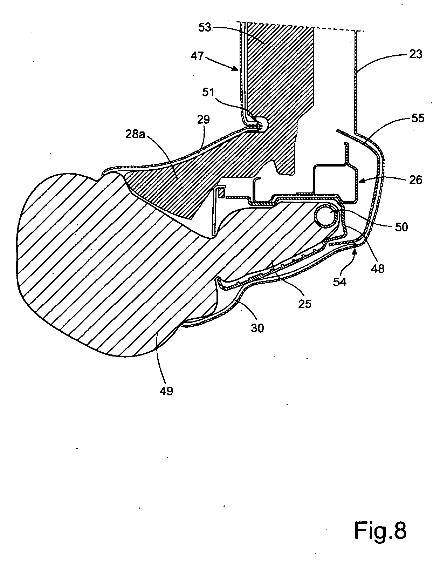

Figure 1a and 1b shows a pair of panels, which together are adapted to form two linked force concentrating means, when sewn into a car seat of the kind according to the invention. Figure 2 shows a car seat comprising a two chamber airbag in a cover and force concentrating means similar to the ones shown in fig 1a and 1b in the vicinity of the airbag. Figure 3 shows a section through a seam, designed to function as a tear line and joining the force concentrating means. Figure 4 shows a section of the seat back of the seat shown in figure 2, displaying a panel similar to the one shown in figure 1 a on the inside of a left side bolster of the seat back. Figure 5 shows a section of the seat back of the seat shown in figure 2, displaying a panel similar to the one shown in figure 1b on the outside of a left side bolster of the seat back. Figure 6 shows a section of a car seat, comprising a two chamber airbag and a pair of linked force concentrating means, the airbag being deploying and bursting the tear line, a seam. Figure 7 shows a through section of the seat back with a non-deployed airbag and a related force concentrator means. Figure 8 shows in principle the same section as figure 6 but with a deploying airbag.

### Mode(s) for Carrying Out the Invention

The present invention makes use of so called force concentrating means. In figure 1 a and 1 b it is shown examples of two panels 10 and 11 that are suitable for combining into a pair of force concentrating means. A first piece 12 of panel 10 and a second piece 13 of panel 11 are adapted to be joined to an upper force concentrating means at a first tear line portion and a third piece 14 of panel 10 and forth piece 15 of panel 11 are adapted to be joined to a lower force concentrating means at a second tear line portion in a car seat, as will be explained in connection with figure 2. The panels 10 and 11 are shown laid out on a respective seat template 16 and 17, the templates 16 and 17 being intended to form a part of a seat upholstery, more particularly an upholstery part covering a seat back side bolster, as will also be explained in connection with figure 2. The panels 10 and 11 are made of a fabric with a substantially non-stretchable material, having a tensile strength suitably in the order of the material in the airbag itself or better. It is often that fabrics have different tensile strengths in different direction, and in figures 1 a and 1 b first arrows 19 and 20 can be seen, indicating a direction in which it is suitable to orient the most tensile resistive direction of the fabric relative to the main tensile direction of the force concentrating means for obtaining the best interaction result between the respective force concentrating means in the shown example.

Figure 2 shows a car seat 21, having a headrest 22, a seat backrest 23 and a seat cushion 24. The seat is covered by upholstery. In the left side of the seat backrest 23, with reference to a traveller sitting on the seat, an airbag cover combination 25 (shown in phantom lines) is arranged, situated mainly behind a side bolster 28 (Figure 7 and 8) of the seat backrest 23 and in a known way attached to a seat backrest frame 26 (Figure 7 and 8). The airbag 25 is adapted to, when in case of a significant accident, deploy through the upholstery in front of it, in particular through a tear line seam 27. The side bolster 28 is covered by the upholstery, in particular by the templates 16 and 17, which meet and are joined at the tear line, a tear seam 27. Hidden behind the templates 16 and 17 are panels 29 and 30, respectively, the panels 29 and 30 being shaped similar to the panels 10 and 11 shown in figure 1. The panels 29 and 30 comprises a first, a second, a third and a fourth piece similar to first, second, third and fourth pieces 12-13 and 14-15 of panels 10 and 11, shown in figure 1, and in figure 2 it is shown how the first and second pieces are joined at an upper tear seam portion 31, and the third and fourth pieces are joined at a lower tear seam portion 32.

In figure 3 it is shown in section from above a part of the upper tear seam portion 31 (tear seam portion 32 is similar). In the figure, upholstery templates 16 and 17, here shown comprising a two-layer material as often is the case, are situated on the curved outside and the force concentrating means panels 29 and 30 are on the curved inside, facing a bolster (not shown) when mounted at the seat backrest. The upholstery and panel edges have foldings 33 and 34. Joining the two meeting panel/template combinations, in the fold, is part of the tear seam 27. The tear seam 27 is sewn in a very accurate and controlled way. The seam threads used are specifically chosen and the stitch pattern is controlled in order to achieve that the eventual crash behaviour always is the desired. On the inside of the tear seam 27 the panel and template foldings are joined at the foldings 33 and 34 on each side by a joining seam 35 and 36, respectively, which seams are designed to be significantly stronger than the tear line seam 27.

In figures 4 and 5 it is shown how the panels 29 and 30 are situated underneath the seat upholstery, figure 4 showing the panel 29 from the front side of the seat and figure 5 showing the panel 30 from the outside of the seat 21. The panels 29 and 30 are at their remote edges from the tear seam portions 31 and 32 edges firmly attached to the seat 21 as shall be explained in connection to figure 7 and 8. As can be seen in the figures, the panels 10-11 and 29-30, respectively, are comprising each a cut 37-38 and 39-40, respectively. These cuts are dividing the panels into an upper panel part and a lower panel part, relative to the cuts, leaving linking parts in between, the function of which shall be explained further down. Returning to figure 2, the upper parts of the panels 29 and 30, joined by the tear line seam 27 and the joining seams 35 and 36 (not shown in figure 2) above the cuts 39 and 40 inside the upholstery, form an upper force concentrating means 41, situated to receive and concentrate the force generated by the deploying thorax chamber of the airbag to un upper portion 31 of the tear seam 27 joining the panels, while the lower parts of the panels 29 and 30, joined by the tear seam 27 and similar joining seams 33 and 34 inside the upholstery, form a lower force concentrating means 42, situated to receive and concentrate the force generated by the deploying pelvis chamber of the airbag to the lower portion 32 of the tear seam 27 joining the panels. Between the upper and lower force concentrating means the two panels 29 and 30 comprises linking parts 43 and 44 respectively, which, when a deploying airbag generates forces on the upper and lower force concentrating means, acts as a balancing means and transfers forces from one chamber to the other. E.g. when there is the case that the pelvis chamber has a longer way to burst out of the seat and develop freely, the lower force concentrating means 42 is assisted from the force from the thorax chamber via the upper force concentrating means 41 and the linking parts 43 and 44.

In figure 6 it is shown how a thorax chamber 45 and a pelvis chamber 46 is deploying through the upholstery, splitting the tear seam 27 at first at the places where the upper and lower force concentrating means were joined with the tear seam 27 upper and lower portions 31 and 32.

Figure 7 shows a cut through section from above of the airbag side of a car seat backrest 23. On the inside of the upholstery 47 there is a foamed body 53, having a side bolster part 28a, a backrest frame 26 and an airbag cover 48 holding an airbag 49. Inside the airbag cover is schematically shown a gas generator 50. In figures 7 and 8 the upholstery is shown as a single layer, although it normally comprises a laminated material. Adjacent to the upholstery, on the inside, facing the bolster part 28a, the two panels 29 and 30 are shown, the panel 29 situated on the passenger side of the bolster 28a and the panel 30 situated on the outside of the bolster 28a. The tear seam 27, joining the panels 29 and 30, is shown, close to the front edge of the bolster part 28a, and in the proximity to tear seam 27 the panels are sewn to the templates of the upholstery as is shown in figure 3. At the panel edge being remote to the tear line seam edge, panel 29 is joined to the upholstery by an inner seam 51, situated in a longitudinal recess 52 in the foam bolster 53. The inner seam 51 is firmly fixed to the foam body 53 via hogging rings and a bar (not shown), in a way known to the man skilled in the art. Similarly, at the panel edge being remote to the tear line seam 27 edge, panel 30 is joined to the upholstery by an outer seam 54, situated in the proximity of the rear side of the seat backrest 23. This makes the integration of the force concentrating means into the seat very cost effective, since it can be integrated in the upholstery sewing and assembly process. Also, on the inside of the upholstery, at the rear of the backrest 23, a pad 55 is arranged. The inner and outer seams 51 and 54 are sewn with strong threads, in comparison to the threads used in the tear seam 27, the tear seam 27 being designed to be the one bursting when the airbag is deploying. Other details of the backrest are of an art known per se and are not described further since they are not part of the invention.

Figure 8 shows in a similar view as figure 7 a cut through section from above of the airbag side of a car seat backrest 23. In this view the airbag cover 48 is opened and the airbag 49 is under deployment and has torn the tear seam 27 apart with the aid of the panels 29 and 30 of the force concentrating means. The joining seams 35 and 36 (as in figure 3) are still intact as well as the inner and outer seams 51 and 54.

It is to be understood that the invention is not limited to the exact construction illustrated and described above. Various changes and modifications may be made without departing from the scope of the invention as defined in the following claims. The remote edges of the panels could be joined behind the airbag case and completely surround it via e.g. extending tapes, reaching through holes in the foam body, although such a design is a bit more complicated. The fabric chosen for the panels has, as mentioned, to be low-tensile, and a suitable material is Polyamide®. Also panel fabric having different stretch factors in different directions can be used, whereas the preferred direction of the most non-stretchable direction would be similar to the direction of the arrows shown in figure 1, that is, more in line with the longest force concentrating means. The tear seam can, for achieving the desired behaviour, be composed of two threads with different strength; one thread with about the same strength as the thread generally used to sew the upholstery together and another thread, which is considerably weaker in order to burst when being exposed to the force from the deploying airbag. The design of the force concentrating means 43 and 44 and the design of the cuts 39 and 40 can be varied, depending on the design of both the airbag and the seat, especially the thickness of the different parts of the foam body. The invention can be used also with a triple chamber airbag. The important thing is that the force concentrating means interact in order to have the desired timing between the deployment of different chambers of the airbag, which can be two or even more. The templates of the upholstery rear and outside may be of more tensile resistive fabric, ensuring a good fixing at the outer seam 54. Also is it not necessary for the tear line to be defined by a seam.

## Claims

1. A vehicle seat (21) having an upholstery (47) and an airbag (49) contained therein and in particular such a seat with force concentrating means adjacent the airbag to concentrate the force of the inflating airbag at a designated tear line (27) in the upholstery to ensure deployment of the airbag through the tear line upon inflation of the airbag, the force concentrating means comprising a pair of panels (10,11 and 29,30), the pair of panels having two ends (12,13 and 14,15), tied to separate sides of their related tear line (27), **characterized in that** the airbag is of a kind designed to deploy into at least two airbag chambers (45,46) and that the seat is comprising one force concentrating means (41,42) for each air bag chamber (45,46), each force concentrating means being concentrating the respective force from their respective airbag chamber to a related tear line (27), wherein
the force concentrator means (41,42) are concentrating the force at different portions (31,32) of the same tear line (27).

2. A vehicle seat according to claim 1, **characterized in that** the force concentrating means (41,42) are joined by a linking means (43,44), linking the forces generated in the respective force concentrator means by the respective deploying air bag chamber (45,46).

3. A vehicle seat according to any of the foregoing claims, **characterized in that** the force concentrator means (41,42) comprises a pair of panels, made of low tensile fabric and in an integrated way sewn into the upholstery.

4. A vehicle seat according to claim 3, **characterized in that** the linking means (43,44) are integrated in the panels (10,11 or 29,30).

5. A vehicle seat according to any claims 3 or 4, **characterized in that** the panels (10,11 and 29,30) are made of flexible and substantially non-stretchable material, compared to the material of the upholstery.

6. A vehicle seat according to any of claims 3-5, **characterized in that** the panels (10,11 and 29,30) are made of Polyamide®.

7. A vehicle seat according to any of claims 3-6, **characterized in that** the two force concentrating means have different working directions and different length, that the panels have a tensile direction in which their tensile resistivity is optimized and that the tensile direction is oriented more close in line with the go direction of the two force concentrating means being the longest of the two.

8. A vehicle, **characterized in that** it comprises one or more seats according to any of the foregoing claims.

## Patentansprüche

1. Fahrzeugsitz (21), der eine Polsterung (47) und einen Luftsack (49) aufweist, der in dieser aufgenommen ist, und insbesondere ein solcher Sitz mit zu dem Luftsack benachbarten Kraftkonzentrationsmitteln, dass die Kraft des sich aufblähenden Luftsacks in einer gewünschten Reißlinie (27) der Polsterung konzentriert ist, so dass die Entfaltung des Luftsacks durch die Reißlinie bei Aufblähen des Luftsacks gesichert ist, wobei die Kraftkonzentrationsmittel zwei Felder (10, 11 und 29, 30) umfassen, wobei die zwei Felder zwei Enden (12, 13 und 14, 15) aufweisen, die an getrennte Seiten ihrer zugehörigen Reißlinie (27) geschnürt sind,
**dadurch gekennzeichnet, dass**
der Luftsack von einer Art ist, die derart konstruiert ist, dass er sich in zumindest zwei Luftsackkammern (45, 46) entfaltet, und das der Sitz ein Kraftkonzentrationsmittel (41, 42) für jede Luftsackkammer (45, 46) umfasst, wobei jedes Kraftkonzentrationsmittel die jeweilige Kraft seiner jeweiligen Luftsackkammer auf eine zugehörige Reißlinie konzentriert, wobei die Kraftkonzentrationsmittel (41, 42) die Kraft auf verschiedene Abschnitte (31, 32) derselben Reißlinie (27) konzentrieren.

2. Fahrzeugsitz nach Anspruch 1, **dadurch gekennzeichnet, dass** die Kraftkonzentrationsmittel (41, 42) durch ein Verbindungsmittel (43, 44) verbunden sind, das die in den jeweiligen Kraftkonzentrationsmittel erzeugten Kräfte mittels der sich jeweilig entfaltende Luftsackkammer (45, 46) verbindet.

3. Fahrzeugsitz nach einem der vorhergehenden Ansprüche, **dadurch gekennzeichnet, dass** die Kraftkonzentrationsmittel (41, 42) zwei Felder umfassen, die aus wenig dehnbarem Stoff hergestellt sind und die in einer integrierten Weise in die Polsterung eingenäht sind.

4. Fahrzeugsitz nach Anspruch 3, **dadurch gekennzeichnet, dass** die Verbindungsmittel (43, 44) in die Felder (10, 11 oder 29, 30) integriert sind.

5. Fahrzeugsitz nach einem der Ansprüche 3 oder 4, **dadurch gekennzeichnet, dass** die Felder (10, 11 oder 29, 30) aus einem flexiblen und im wesentlichen nicht dehnbaren Material hergestellt sind, verglichen mit dem Material der Polsterung.

6. Fahrzeugsitz nach einem der Ansprüche 3 bis 5, **dadurch gekennzeichnet, dass** die Felder (10, 11 oder 29, 30) aus Polyamid hergestellt sind.

7. Fahrzeugsitz nach einem der Ansprüche 3 bis 6, **dadurch gekennzeichnet, dass** die zwei Kraftkonzentrationsmittel unterschiedliche Arbeitsrichtungen und unterschiedliche Längen aufweisen, dass die Felder eine Dehnrichtung aufweisen, in der ihre Dehnresistenz optimiert ist, und dass die Dehnrichtung näher zur Linie der Richtung der zwei Kraftkonzentrationsmittel, das das längere der zwei ist, gerichtet ist.

8. Fahrzeug, **dadurch gekennzeichnet, dass** es einen oder mehrere Sitze nach irgendeinem der vorhergehenden Ansprüche umfasst.

## Revendications

1. Siège de véhicule (21), ayant une garniture (47) et un coussin de sécurité gonflable (49) contenu dans celle-ci, ledit siège comprenant en particulier des moyens de concentration de force adjacents au coussin de sécurité gonflable pour concentrer la force du coussin de sécurité gonflable en cours de gonflage sur une ligne de déchirement (27) dans la garniture pour assurer le déploiement du coussin de sécurité gonflable à travers la ligne de déchirement lors du gonflage du coussin de sécurité gonflable, les moyens de concentration de force comprenant une paire de panneaux (10, 11 et 29, 30), la paire de panneaux comportant deux extrémités (12, 13 et 14, 15), reliées à des côtés distincts de leur ligne de déchirement correspondante (27), **caractérisé en ce que** le coussin de sécurité gonflable est d'un type conçu pour se déployer dans au moins deux chambres de coussin de sécurité gonflable (45, 46) et **en ce que** le siège comprend un moyen de concentration de force (41, 42) pour chaque chambre de coussin de sécurité gonflable (45, 46), chaque moyen de concentration de force concentrant la force respective de sa chambre de coussin de sécurité gonflable respective sur une ligne de déchirement correspondante (27), dans lequel les moyens de concentration de force (45, 46) concentrent la force à des parties différentes (31, 32) de la même ligne de déchirement (27).

2. Siège de véhicule selon la revendication 1, **caractérisé en ce que** les moyens de concentration de force (41, 42) sont reliés par des moyens de liaison (43, 44) reliant les forces générées dans les moyens de concentration de force respectifs par le déploiement des chambres de coussin de sécurité gonflable respectives (45, 46).

3. Siège de véhicule selon l'une quelconque des revendications précédentes, **caractérisé en ce que** les moyens de concentration de force (41, 42) comprennent une paire de panneaux faits d'un tissu à faible solidité à la rupture et cousus de manière intégrante dans la garniture.

4. Siège de véhicule selon la revendication 3, **caractérisé en ce que** les moyens de liaison (43, 44) sont intégrés dans les panneaux (10, 11 ou 29, 30).

5. Siège de véhicule selon l'une quelconque des revendications 3 ou 4, **caractérisé en ce que** les panneaux (10, 11 et 29, 30) sont faits d'un matériau flexible et sensiblement non étirable, comparativement au matériau de la garniture.

6. Siège de véhicule selon l'une quelconque des revendications 3 à 5, **caractérisé en ce que** les panneaux (10, 11 et 29, 30) sont faits de Polyamide^{®}.

7. Siège de véhicule selon l'une quelconque des revendications 3 à 6, **caractérisé en ce que** les deux moyens de concentration de force ont des longueurs et des sens de travail différents, **en ce que** les panneaux ont un sens de traction dans lequel leur résistance à la rupture est optimisée et **en ce que** le sens de traction est orienté de sorte à être plus aligné avec le sens des deux moyens de concentration de force étant le plus long des deux.

8. Véhicule, **caractérisé en ce qu'**il comprend un ou plusieurs sièges selon l'une quelconque des revendications précédentes.
